# EUROPÄISCHE PATENTSCHRIFT

(11) **EP 0 700 865 B1**
(45) Veröffentlichungstag und Bekanntmachung des Hinweises auf die Patenterteilung: **08.04.1998**
(21) Anmeldenummer: 94112718.5
(22) Anmeldetag: 16.08.1994
(51) Int. Cl.: B67D 5/08, G01F 25/00

(54) **Verfahren und Vorrichtung zur Überwachung und/oder Nachreichung von Kolbenmessern in Tankanlagen**
Method and apparatus for monitoring and/or callibration of piston flowmeter in petrol stations
Procédé et dispositif pour la surveillance et/ou l'étalonnage des débitmètres à piston dans des installations de distribution de carburant

(43) Veröffentlichungstag der Anmeldung: 13.03.1996
(73) Patentinhaber: SCHEIDT & BACHMANN GMBH, D-41238 Mönchengladbach (DE)
(72) Erfinder: Miller, Gert, Dipl.-Ing., D-41063 Mönchengladbach (DE); Schlechtriem, Gregor, Dr., D-40545 Düsseldorf (DE)
(74) Vertreter: Stenger, Watzke & Ring Patentanwälte

(56) Entgegenhaltungen:
- EP-A- 0 315 738
- FR-A- 2 688 881
- PATENT ABSTRACTS OF JAPAN vol. 8, no. 101 (P-273) (1538) 12. Mai 1984 & JP-A-59 013 920 (TOMINAGA SEISAKUSHO) 24. Januar 1984

## Beschreibung

Die Erfindung betrifft ein Verfahren und eine Vorrichtung zur Überwachung und/oder Nacheichung von Kolbenmessern in Tankanlagen zur Abgabe flüssiger Kraftstoffe mit einer Mehrzahl von Zapfstellen, die jeweils mit mindestens einer Pumpe für jede Kraftstoffsorte und mindestens zwei jeder Pumpe zugeordneten Kolbenmessern ausgestattet sind, die für die Erfassung der jeweils abgegebenen Flüssigkeitsmenge jeweils einen Impulsgeber antreiben, dem ein Rechner zur Berechnung der abgegebenen Flüssigkeitsmenge und des zugehörigen Preises nachgeschaltet ist, wobei im Rechner für jeden Kolbenmesser ein Korrekturfaktor gespeichert ist, der die aufgrund unvermeidbarer Toleranzen entstehenden Abweichungen der tatsächlich abgegebenen Flüssigkeitsmenge von der mit Hilfe des Impulsgebers ermittelten Menge berücksichtigt.

Tankanlagen mit einer Mehrzahl von Zapfstellen zur Abgabe flüssiger Kraftstoffe sind in verschiedenen Ausführungen bekannt. Hierbei ist jede Zapfstelle jeweils mit mindestens einer Pumpe für jede Kraftstoffsorte und mit mindestens zwei jeder Pumpe zugeordneten Kolbenmessern ausgestattet. Die Kunden der Tankanlage können somit an verschiedenen Zapfstellen tanken, und zwar unterschiedliche Kraftstoffsorten, wie unverbleite Ottokraftstoffe (Normal, Super, Super plus), verbleiten Superkraftstoff und Diesel, ggf. unterschiedlicher Qualität.

Zur Erfassung der jeweils abgegebenen Flüssigkeitsmenge treibt jeder Kolbenmesser jeweils einen Impulsgeber an, dessen Impulse einem Rechner zur Berechnung der abgegebenen Flüssigkeitsmenge und des zugehörigen Preises zugeführt werden. Da bei der Herstellung der Kolbenmesser Toleranzen unvermeidbar sind, die zu Abweichungen zwischen der tatsächlich abgegebenen Flüssigkeitsmenge und der vom Impulsgeber ermittelten Menge führen, wird im Rechner für jeden Kolbenmesser ein entsprechender Korrekturfaktor gespeichert, der bei der Ermittlung der abgegebenen Flüssigkeitsmenge und des zugehörigen Preises die Abweichungen des Istwertes vom Sollwert berücksichtigt.

Da dieser Korrekturfaktor lediglich bei der Inbetriebnahme der jeweiligen Zapfstelle die bei der Herstellung des jeweiligen Kolbenmesser unvermeidbaren Toleranzen berücksichtigt, ist es gesetzlich vorgeschrieben, jeden Kolbenmesser zur Abgabe flüssiger Kraftstoffe periodisch zu überprüfen und ggf. nachzueichen, um die durch Verschleiß entstehenden Abweichungen zwischen Soll- und Istwert bei der Mengen- und Preis-Ermittlung auszugleichen. Für diese Überwachung und ggf. Nacheichung werden fahrbare Eichgeräte verwendet. Für die Überprüfung und ggf. Nacheichung müssen die jeweiligen Zapfstellen außer Betrieb gesetzt werden. Neben den hierdurch entstehenden Stillstandszeiten ergibt sich der Nachteil eines hohen personellen Aufwandes.

Aus der JP-A-59 013 920 ist ein Verfahren und eine Vorrichtung der obengenannten Art bekannt, bei denen mittels zwei in Reihe geschalteten Durchflußmessern ein bei einem ersten Durchflußmesser auftretender Anzeigefehler durch den zweiten Durchflußmesser kompensiert wird. Zu diesem Zweck werden von jedem Durchflußmesser in Abhängigkeit des Durchflußsatzes Impulse erzeugt, die in einer Kompensations- und Vergleichsschaltung miteinander verglichen werden. Unter der Voraussetzung daß der zweite Durchflußmesser genaue Meßwerte liefert, wird die Kompensation des Anzeigefehlers des ersten Durchflußmessers vorgenommen. Als Nachteil dieses Verfahrens erweist sich, daß der zweite Durchflußmesser ständig in Reihe mit dem ersten Durchflußmesser geschaltet ist und außer einer Kalibrierungsfunktion für den ersten Durchflußmesser keinen weiteren Zweck verfolgt, das heißt noch nicht einmal redundant im Falle einer Störung zu verwenden ist. Eine nach einem derartigen Verfahren betriebene Tankanlage ist daher mit hohen Herstellungskosten verbunden.

Der Erfindung liegt die **Aufgabe** zugrunde, ein Verfahren und eine Vorrichtung zur Überwachung und/oder Nacheichung von Kolbenmessern der eingangs beschriebenen Art zu schaffen, mit dem unter Vermeidung der beschriebenen Nachteile, insbesondere des Einsatzes fahrbarer Eichgeräte, und des damit verbundenen personellen Aufwandes eine zentrale Überprüfung und ggf. Nacheichung durchgeführt werden kann.

Die **Lösung** dieser Aufgabenstellung durch die Erfindung ist durch die Merkmale des kennzeichnenden Teils des Anspruchs 1 für das Verfahren und des Anspruchs 5 als zugehörige Vorrichtung gekennzeichnet.

Mit der Erfindung wird ein Verfahren geschaffen, durch das mit geringem technischen Aufwand der periodisch vor Ort mit einer fahrbaren Eichvorrichtung durchzuführende Überwachungsvorgang entfällt und durch eine Fernüberprüfung ersetzt wird, die innerhalb einer sehr kurzen Zeitspanne sowohl von einer zentralen Stelle der Tankanlage als auch aus großer Entfernung beispielsweise von der Zentrale der Betreibergesellschaft aus durchgeführt werden kann. Da für die Überprüfung und ggf. Nacheichung vorhandene Kolbenmesser der Tankanlage verwendet werden, kann die Frist für die periodische Überprüfung erheblich verkürzt werden, ohne daß sich hierdurch ins Gewicht fallende Kosten ergeben. Für die Überprüfung ist es lediglich erforderlich, die vorhandenen, zu ein und derselben Pumpe gehörenden Kolbenmesser in der erfindungsgemäßen Weise hintereinanderzuschalten. Da der Überprüfungsvorgang kurzfristig durchführbar ist, entstehen nur kurze Stillstandszeiten für die jeweilige Zapfstelle.

Gemäß einem weiteren Merkmal der Erfindung wird bei festgestellten Abweichungen der Korrekturfaktor des jeweils überwachten Kolbenmessers im Speicher des Rechners korrigiert. Auch hierfür ist kein großer Aufwand erforderlich, so daß mit dem erfindungsgemäßen Verfahren auch über längere Zeiten eine hohe Eichgenauigkeit sichergestellt werden kann.

Bei einer bevorzugten Ausgestaltung der Erfindung wird jeder Kolbenmesser durch mehrere als Eichnormal verwendete Kolbenmesser derselben Kraftstoffart überprüft. Hierdurch erhöht sich die Eichgenauigkeit, wobei Kolbenmesser derselben Kraftstoffart, wie beispielsweise bleifreier Ottokraftstoff, auch dann miteinander verbunden werden können, wenn sie im Betrieb zur Abgabe von unverbleitem Normalkraftstoff, unverbleitem Super und unverbleitem Super plus eingesetzt werden.

Die Meßergebnisse der Überprüfung können durch Datenfernübertragung dem Zentralcomputer einer Überwachungsstelle zugeführt werden, der die Meßergebnisse mit den für jeden überwachten Kolbenmesser abgespeicherten Eichwerten vergleicht und bei relevanten Abweichungen den jeweiligen Korrekturfaktor verändert und im Speicher des den jeweiligen Kolbenmesser zugeordneten Rechners ablegt. Durch den erfindungsgemäßen Einsatz eines Zentralcomputers läßt sich beispielsweise durch Interpolation rechtzeitig voraussagen, wann ein Kolbenmesser verschlissen ist und ersetzt werden muß.

Die erfindungsgemäße Vorrichtung zur Durchführung des voranstehend geschilderten Verfahrens ist dadurch gekennzeichnet, daß saugseitig vor jeder Pumpe ein Rückschlagventil, zwischen der Pumpe und jedem Kolbenmesser ein fernbetätigbares Absperrventil und hinter jedem Kolbenmesser ein fernbetätigbares Dreiwegeventil angeordnet ist, das den Kolbenmesser entweder mit dem Zapfschlauch oder über eine Verbindungsleitung mit der Zuflußseite eines anderen Kolbenmessers oder mit einer Rückführleitung verbindet, die zwischen Rückschlagventil und Pumpe mündet.

Für die Vorrichtung zur Durchführung des erfindungsgemäßen Verfahrens sind somit lediglich einige Ventile und Verbindungsleitungen vorzusehen. Mit geringem technischen Aufwand läßt sich somit mit Hilfe der erfindungsgemäßen Vorrichtung das sehr aufwendige periodische Überprüfen mittels einer fahrbaren Eichvorrichtung vermeiden.

Bei einer bevorzugten Ausführungsform der Erfindung sind die fernbetätigbaren Ventile als Magnetventile ausgeführt.

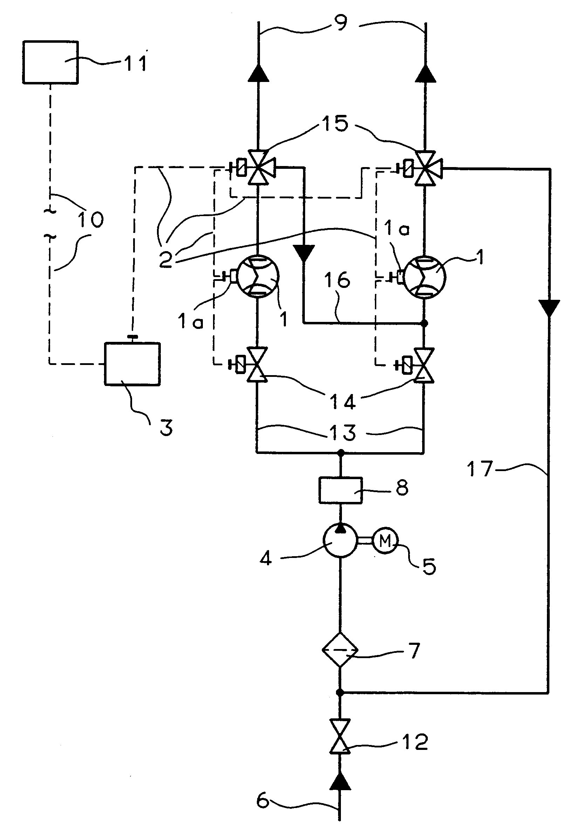

Auf der Zeichnung ist schematisch ein Ausführungsbeispiel der erfindungsgemäßen Vorrichtung dargestellt, mit dessen Hilfe nachfolgend das erfindungsgemäße Verfahren erläutert werden wird.

Auf der Zeichnung sind zwei zu einer gemeinsamen Zapfstelle einer im übrigen nicht dargestellten Tankanlage gehörende Kolbenmesser 1 zu erkennen, die jeweils einen Impulsgeber 1a antreiben. Jeder dieser Impulsgeber 1a ist über zur Zapfstelle bzw. Tankanlage gehörende Steuerleitungen 2 mit einem Rechner 3 verbunden, der anhand der vom jeweiligen Impulsgeber 1a erhaltenen Impulse fortlaufend die Menge und den Preis des jeweils ausgegebenen Kraftstoffes errechnet und über eine auf der Zeichnung nicht dargestellte Anzeigevorrichtung anzeigt. Im Rechner 3 ist für jeden Kolbenmesser 1 ein Korrekturfaktor gespeichert, der die aufgrund unvermeidbarer Toleranzen entstehenden Abweichungen der tatsächlich abgegebenen Flüssigkeitsmenge von der mit Hilfe des Impulsgeber 1a ermittelten Menge berücksichtigt.

Die beiden auf der Zeichnung dargestellten Kolbenmesser 1 werden parallel zueinander von einer gemeinsamen Pumpe 4 mit Kraftstoff versorgt. Die Pumpe 4 wird von einem Motor 5 angetrieben. Sie saugt den jeweiligen Kraftstoff über eine Ansaugleitung 6 aus einem auf der Zeichnung nicht dargestellten Tank, wobei vor der Pumpe 4 ein Filter 7 angeordnet und der Pumpe 4 ein Gasabscheider 8 nachgeordnet ist. Dieser Gasabscheider 8 stellt sicher, daß der die Kolbenmesser 1 antreibende Flüssigkeitsstrom keine Gasblasen enthält, die die durch die Kolbenmesser 1 bewirkte Volumenermittlung verfälschen.

Die den jeweiligen Kolbenmesser 1 verlassende Flüssigkeit wird jeweils einem Zapfschlauch 9 zugeführt, der an seinem Ende mit einem auf der Zeichnung nicht dargestellten Zapfventil versehen ist, durch das die Flüssigkeitsabgabe gesteuert werden kann. Um die im Rechner 3 ermittelten Daten weiterverarbeiten zu können, ist der Rechner 3 über Datenfernübertragungsleitungen 10 mit einem Zentralrechner 11 verbunden.

Um jeweils einen der beiden Kolbenmesser 1 hinsichtlich vorhandener, vorzugsweise durch Verschleiß entstandener Abweichungen überprüfen zu können, ist vor der Pumpe 4 ein Rückschlagventil 12 und zwischen der Pumpe 4 und jedem Kolbenmesser 1 in der jeweiligen Versorgungsleitung 13 ein Absperrventil 14 angeordnet. Hinter jedem Kolbenmesser 1 befindet sich vor dem Zapfschlauch 9 ein Zweiwegeventil 15. Sowohl bei den Absperrventilen 14 als auch bei den Zweiwegeventilen 15 handelt es sich um fernbetätigbare Ventile, vorzugsweise Magnetventile, welche über die Steuerleitungen 2 mit dem Rechner 3 verbunden sind und auf diese Weise vom Rechner 3 gesteuert, d.h. geöffnet oder geschlossen bzw. umgeschaltet werden können.

Während das dem einem Kolbenmesser 1 nachgeschaltete Zweiwegeventil 15 über eine Verbindungsleitung 16 diesem Kolbenmesser 1 mit der Zuflußseite des anderen Kolbenmessers 1 verbindet, ist an das Zweiwegeventil 15 des letztgenannten Kolbenmessers 1 eine Rückführleitung 17 angeschlossen, die zwischen dem Rückschlagventil 12 und der Pumpe 4 mündet.

Mit Hilfe der Ventile 12,14 und 15 sowie der Leitungen 16 und 17 ist es möglich, die von dem einen Kolbenmesser 1 abgegebene Flüssigkeitsmenge einem derselben Pumpe 4 zugeordneten, von der Versorgung durch diese Pumpe 4 abgetrennten Kolbenmesser 1 zuzuführen und im geschlossenen Kreislauf an die Saugseite der Pumpe 4 zurückzuführen, wobei einer der Kolbenmesser 1 als Eichnormal zur Überwachung des jeweils anderen Kolbenmessers 1 herangezogen wird. Welcher der beiden Kolbenmesser 1 beim Ausführungsbeispiel als Eichnormal verwendet wird, ergibt sich durch die verwendete Software; beide Kolbenmesser 1 können jeweils als Eichnormal zur Überprüfung des jeweils anderen Kolbenmessers 1 herangezogen werden.

Im normalen Betrieb sind beide Absperrventile 14 offen und die Zweiwegeventile 15 derart geschaltet, daß jede Versorgungsleitung 13 mit dem zugehörigen Zapfschlauch 9 verbunden ist. Durch Betätigung eines oder beider Zapfventile kann in dieser Stellung mit Hilfe der Pumpe 4 Kraftstoff aus dem nicht dargestellten Lagertank angesaugt und an das jeweils zu betankende Fahrzeug abgegeben werden. Durch die Saugleistung der Pumpe 4 wird hierbei das Rückschlagventil 12 geöffnet.

Sofern einer der beiden Kolbenmesser 1 mit dem Ziel einer ggf. notwendigen Nacheichung überprüft werden soll, wird das zwischen Pumpe 4 und der Mündung der Verbindungsleitung 16 angeordnete Absperrventil 14 geschlossen. Außerdem werden die Zweiwegeventile 15 umgeschaltet, so daß sie die Druckseite des in der linken Versorgungsleitung 13 angeordneten Kolbenmessers 1 mit der Saugseite des in der rechten Versorgungsleitung 13 angeordneten Kolbenmessers 1 verbinden. Die Druckseite dieses Kolbenmessers 1 wird über die Rückführleitung 17 mit der Saugseite der Pumpe 4 verbunden. In dieser Stellung fördert die Pumpe 4 flüssigen Kraftstoff ausschließlich zu dem in der linken Versorgungsleitung 13 angeordneten Kolbenmesser 1. Die diesen Kolbenmesser 1 verlassende Flüssigkeitsmenge durchströmt anschließend die Verbindungsleitung 16 und gelangt saugseitig in den in der rechten Versorgungsleitung 13 angeordneten Kolbenmesser 1. Die diesen Kolbenmesser 1 verlassende Flüssigkeitsmenge gelangt über die Rückführleitung 17 im geschlossenen Kreislauf wieder an die Ansaugseite der Pumpe 4. Da auf diese Weise auf der Ausgangsseite des Rückschlagventils 12 Druck ansteht, schließt dieses Rückschlagventil 12 selbsttätig.

Mit Hilfe der jedem Kolbenmesser 1 zugeordneten Impulsgeber 1a wird im Rechner 3 die den jeweiligen Kolbenmesser 1 durchströmende Flüssigkeitsmenge ermittelt. Sollten sich bei dieser Überprüfung Abweichungen ergeben, werden diese im Rechner 3 festgestellt und - bei Überschreiten eines gewissen Toleranzwertes - zur Veränderung des jeweiligen Korrekturfaktors benutzt, der im Rechner 3 für jeden Kolbenmesser 1 abgespeichert ist, und zwar in Abhängigkeit davon, welcher der beiden Kolbenmesser 1 bei der Überprüfung als Eichnormal verwendet worden ist.

Da die Meßergebnisse der Überprüfung über die Datenfernübertragungsleitungen 10 dem Zentralrechner 11 mitgeteilt werden, kann von einer zentralen Überwachungsstelle aus eine Überprüfung der Meßergebnisse durchgeführt und an dieser zentralen Überwachungsstelle entschieden werden, ob nach einem Eichwertvergleich bei relevanten Abweichungen der jeweilige Korrekturfaktor des Kolbenmessers 1 im Rechner 3 verändert werden soll. Da die Umschaltung der Ventile 14 und 15 innerhalb von Betriebspausen kurzfristig durchgeführt werden kann, ist jederzeit eine Überprüfung und ggf Nacheichung der Kolbenmesser 1 möglich. Durch Umschalten der Zweiwegeventile 15 und Öffnen des Absperrventils 14 kann die Zapfstelle innerhalb kürzester Frist wieder für die Abgabe flüssiger Kraftstoffe zur Verfügung stehen.

### Bezugszeichenliste

- 1: Kolbenmesser
- 1a: Impulsgeber
- 2: Steuerleitung
- 3: Rechner
- 4: Pumpe
- 5: Motor
- 6: Ansaugleitung
- 7: Filter
- 8: Gasabscheider
- 9: Zapfschlauch
- 10: Datenfernübertragungsleitung
- 11: Zentralrechner
- 12: Rückschlagventil
- 13: Versorgungsleitung
- 14: Absperrventil
- 15: Zweiwegeventil
- 16: Verbindungsleitung
- 17: Rückführleitung

## Patentansprüche

1. Verfahren zur Überwachung und/oder Nacheichung von Kolbenmessern (1) in Tankanlagen zur Abgabe flüssiger Kraftstoffe mit einer Mehrzahl von Zapfstellen, die jeweils mit mindestens einer Pumpe (4) für jede Kraftstoffsorte und mindestens zwei jeder Pumpe (4) zugeordneten Kolbenmessern (1) ausgestattet sind, die für die Erfassung der jeweils abgegebenen Flüssigkeitsmenge jeweils einen Impulsgeber (1a) antreiben, dem ein Rechner (3) zur Berechnung der abgegebenen Flüssigkeitsmenge und des zugehörigen Preises nachgeschaltet ist, wobei im Rechner (3) für jeden Kolbenmesser (1) ein Korrekturfaktor gespeichert ist, der die aufgrund unvermeidbarer Toleranzen entstehenden Abweichungen der tatsächlich abgegebenen Flüssigkeitsmenge von der mit Hilfe des Impulsgebers (1a) ermittelten Menge berücksichtigt,
**dadurch gekennzeichnet,**
daß die von einem Kolbenmesser (1) abgegebene Flüssigkeitsmenge dem anderen oder einem anderen derselben Pumpe (4) zugeordneten, von der während des Normalbetriebs erfolgenden direkten Versorgung durch diese Pumpe (4) abgetrennten Kolbenmesser (1) zugeführt und im geschlossenen Kreislauf an die Saugseite der Pumpe (4) rückgeführt wird und daß einer der Kolbenmesser (1) als Eichnormal zur Überwachung und/oder Nacheichung des jeweils anderen Kolbenmessers (1) herangezogen wird.

2. Verfahren nach Anspruch 1, dadurch gekennzeichnet, daß bei festgestellten Abweichungen der Korrekturfaktor des jeweils überwachten Kolbenmessers (1) im Speicher des Rechners (3) korrigiert wird.

3. Verfahren nach Anspruch 1, dadurch gekennzeichnet, daß jeder Kolbenmesser (1) durch mehrere als Eichnormal verwendete Kolbenmesser (1) derselben Kraftstoffart überprüft wird.

4. Verfahren nach mindestens einem der Ansprüche 1 bis 3, dadurch gekennzeichnet, daß die Meßergebnisse der Überprüfung durch Datenfernübertragung dem Zentralrechner (11) einer Überwachungsstelle zugeführt werden, der die Meßergebnisse mit den für jeden überwachten Kolbenmesser (1) abgespeicherten Eichwerten vergleicht und bei relevanten Abweichungen den jeweiligen Korrekturfaktor verändert und im Speicher des dem jeweiligen Kolbenmesser (1) zugeordneten Rechners (3) ablegt.

5. Vorrichtung zur Durchführung des Verfahrens nach mindestens einem der Ansprüche 1 bis 4, umfassend mindestens eine Pumpe (4) und mindestens zwei jeder Pumpe (4) zugeordneten Kolbenmessern (1), die für die Erfassung der jeweils abgegebenen Flüssigkeitsmenge jeweils einen Impulsgeber (1a) antreiben, dem ein Rechner (3) zur Berechnung der abgegebenen Flüssigkeitsmenge und des zugehörigen Preises nachgeschaltet ist, wobei im Rechner (3) für jeden Kolbenmesser (1) ein Korrekturfaktor gespeichert ist, der die aufgrund unvermeidbarer Toleranzen entstehenden Abweichungen der tatsächlich abgegebenen Flüssigkeitsmenge von der mit Hilfe des Impulsgebers (1a) ermittelten Menge berücksichtigt, dadurch gekennzeichnet, daß saugseitig vor jeder Pumpe (4) ein Rückschlagventil (12), zwischen der Pumpe (4) und jedem Kolbenmesser (1) ein fernbetätigbares Absperrventil (14) und hinter jedem Kolbenmesser (1) ein fernbetätigbares Zweiwegeventil (15) angeordnet ist, das den Kolbenmesser (1) entweder mit dem Zapfschlauch (9) oder über eine Verbindungsleitung (16) mit der Zuflußseite eines anderen Kolbenmessers (1) oder mit einer Rückführleitung (17) verbindet, die zwischen Rückschlagventil (12) und Pumpe (4) mündet.

6. Vorrichtung nach Anspruch 5, dadurch gekennzeichnet, daß die fernbetätigbaren Ventile (14,15) als Magnetventile ausgebildet sind.

## Claims

1. Method for monitoring and/or recalibrating piston flowmeters (1) in petrol stations for delivering liquid fuels, having a plurality of filling points which are respectively provided with at least one pump (4) for each grade of fuel and at least two piston flowmeters (1) assigned to each pump (4), which flowmeters in each case drive a pulse generator (1a) for registering the amount of liquid delivered in each case, downstream of which generator there is connected a computer (3) for calculating the amount of liquid delivered and the associated price, a correction factor which takes into account the deviations between the amount of liquid actually delivered and the amount determined with the aid of the pulse generator (1a), occurring because of unavoidable tolerances, being stored in the computer (3) for each piston flowmeter (1), characterized in that the amount of liquid delivered by one piston flowmeter (1) is fed to the other or another piston flowmeter (1) assigned to the same pump (4) but separated from the direct supply by this pump (4) taking place during normal operation, and is returned in the closed cycle to the suction side of the pump (4) and in that one of the piston flowmeters (1) is used as a calibration standard for monitoring and/or recalibrating the other piston flowmeter (1), respectively.

2. Method according to Claim 1, characterized in that, when deviations are established, the correction factor of the respectively monitored piston flowmeter (1) in the memory of the computer (3) is corrected .

3. Method according to Claim 1, characterized in that each piston flowmeter (1) is checked by a plurality of piston flowmeters (1) of the same fuel type, used as a calibration standard.

4. Method according to at least one of Claims 1 to 3, characterized in that the measurement results of the check are fed by remote data transmission to the central computer (11) of a monitoring point, which compares the measurement results with the calibration values stored for each monitored piston flowmeter (1) and, if there are relevant deviations, changes the respective correction factor and stores it in the memory of the computer (3) assigned to the respective piston flowmeter (1).

5. Apparatus for carrying out the method according to at least one of Claims 1 to 4, comprising at least one pump (4) and at least two piston flowmeters (1) assigned to each pump (4), which flowmeters in each case drive a pulse generator (1a) for registering the amount of liquid delivered in each case, downstream of which generator there is connected a computer (3) for calculating the amount of liquid delivered and the associated price, a correction factor which takes into account the deviations between the amount of liquid actually delivered and the amount determined with the aid of the pulse generator (1a), occurring because of unavoidable tolerances, being stored in the computer (3) for each piston flowmeter (1), characterized in that, on the suction side, arranged before each pump (4) there is a non-return valve (12), arranged between the pump (4) and each piston flowmeter (1) there is a remote-controllable shut-off valve (14) and arranged after each piston flowmeter (1) there is a remote-controllable two-way valve (15), which connects the piston flowmeter (1) either to the filling hose (9) or via a connection line (16) to the inflow side of another piston flowmeter (1) or to a return line (17), which opens out between the non-return valve (12) and the pump (4).

6. Apparatus according to Claim 5, characterized in that the remote-controllable valves (14, 15) are designed as solenoid valves.

## Revendications

1. Procédé de contrôle et/ou de vérification de l'étalonnage de débitmètres à piston (1) dans des installations de distribution de carburants liquides comportant une pluralité de postes distributeurs, qui sont chaque fois équipés d'au moins une pompe (4) pour chaque sorte de carburant et d'au moins deux débitmètres à piston (1) associés à chaque pompe (4) et qui, pour la détection de la quantité de liquide chaque fois fournie, commandent chacun un générateur d'impulsions (1a) qui est relié à un ordinateur (3) servant à calculer la quantité de liquide fournie et le prix correspondant, un coefficient de correction étant mémorisé dans l'ordinateur (3) pour chaque débitmètre à piston (1), ce coefficient prenant en considération les écarts, résultant de tolérances inévitables, entre la quantité de liquide réellement fournie et la quantité déterminée à l'aide du générateur d'impulsions (1a),
caractérisé en ce que
la quantité de liquide fournie par un débitmètre à piston (1) est amenée à l'autre ou à un autre débitmètre à piston (1) associé à la même pompe (4) et dont l'alimentation, qui est effectuée directement en fonctionnement normal par cette pompe (4), est coupée, laquelle quantité de liquide est ramenée en circuit fermé au côté aspiration de la pompe (4), et en ce que l'un des débitmètres à piston (1) est utilisé en tant que référence d'étalonnage pour le contrôle et/ou la vérification de l'étalonnage de l'autre débitmètre à piston (1).

2. Procédé selon la revendication 1, caractérisé en ce que, lorsque des écarts sont constatés, le coefficient de correction du débitmètre à piston (1), chaque fois contrôlé, est corrigé dans la mémoire de l'ordinateur (3).

3. Procédé selon la revendication 1, caractérisé en ce que chaque débitmètre à piston (1) est contrôlé au moyen de plusieurs débitmètres à piston (1) du même type de carburant, utilisés en tant que référence d'étalonnage.

4. Procédé selon au moins l'une des revendications 1 à 3, caractérisé en ce que les résultats des mesures de l'opération de contrôle sont fournis, par une télétransmission de données, à l'ordinateur central (11) d'un poste de surveillance, lequel ordinateur central compare les résultats des mesures aux valeurs d'étalonnage mémorisées pour chaque débitmètre à piston (1) sous surveillance et, dans le cas d'écarts, modifie le coefficient correspondant de correction et l'enregistre dans la mémoire de l'ordinateur (3) associé au débitmètre à piston (1) en question.

5. Dispositif servant à la mise en oeuvre du procédé selon au moins l'une des revendications 1 à 4, et comprenant au moins une pompe (4) et au moins deux débitmètres à piston (1) associés à chaque pompe (4) et qui, pour la détermination de la quantité de liquide chaque fois fournie, commandent chacun un générateur d'impulsions (1a) qui est relié à un ordinateur (3) servant à calculer la quantité de liquide fournie et le prix correspondant, un coefficient de correction étant mémorisé pour chaque débitmètre à piston (1) dans l'ordinateur (3), ce coefficient prenant en considération les écarts, résultant de tolérances inévitables, entre la quantité de liquide réellement fournie et la quantité déterminée à l'aide du générateur d'impulsions (1a), caractérisé en ce qu'il est prévu, du côté aspiration avant chaque pompe (4), une soupape de non-retour (12), entre la pompe (4) et chaque débitmètre à piston (1), une soupape d'arrêt (14) actionnable à distance et, après chaque débitmètre à piston (1), une soupape à deux voies (15) actionnable à distance et reliant le débitmètre à piston (1) soit au tuyau distributeur (9) soit, par l'intermédiaire d'une conduite de raccordement (16), au côté admission d'un autre débitmètre à piston (1), soit à une conduite de retour (17), qui débouche entre la soupape de non-retour (12) et la pompe (4).

6. Dispositif selon la revendication 5, caractérisé en ce que les soupapes (14, 15) actionnables à distance sont réalisées sous la forme d'électrovalves.
